# EUROPEAN PATENT SPECIFICATION

(11) **EP 4 652 394 B1**
(45) Date of publication and mention of the grant of the patent: **18.11.2026**
(21) Application number: 24705035.4
(22) Date of filing: 16.01.2024
(51) Int. Cl.: F16K 31/50, F16L 41/00

(54) **SERVICE TEE WITH VALVE PLUG FOR ISOLATION OF SIDE OUTLET**
SERVICE-TEE MIT VENTILSTOPFEN ZUR ISOLIERUNG EINES SEITLICHEN AUSLAUFS
TÉ DE SERVICE AVEC BOUCHON DE SOUPAPE POUR L'ISOLEMENT D'UNE SORTIE LATÉRALE

(30) Priority: 16.01.2023 US 202363480029 P
(43) Date of publication of application: 26.11.2025
(73) Proprietor: TDW DELAWARE, INC., Wilmington, Delaware 19801 (US)
(72) Inventor: MCCASKILL, Daniel, Tulsa, OK 74107 (US)
(74) Representative: Bewley, Ewan Stuart
(86) International application number: PCT/US2024/011597
(87) International publication number: WO 2024/155580

(56) References cited:
- BE-A- 517 357
- GB-A- 150 371
- RU-C2- 2 171 410
- US-A- 1 805 106

## Description

### BACKGROUND

This disclosure is in the field of pipeline plugs and closures and, in particular, plugs designed to prevent flow through a side outlet of a tee. The tee may be used to make a main to service connection or to control service line flow at the main.

Prior art plugs include MUELLER^{®} NO-BLO^{®} H-17656 service stop tee and H-17800 curb stop tee. *See also* RU2171410C2; BE517357A; GB150371A; US1805106. A stem and bushing arrangement extends and retracts a seal element that, when fully extended, resides in a seat located below the side outlet. As the stem rotates, so does the seal element.

### SUMMARY

The invention is set out in the appended set of claims.

A valve plug of this disclosure may be used to prevent flow through a side outlet of a tee. Embodiments of the valve plug include a plunger connected to a threaded stem extending from a bottom end of the plug body. Turning the threaded stem actuates the plunger, thereby advancing and retracting a seal of the plunger to block or allow flow respectively.

Unlike the prior art, in embodiments of this disclosure a keyway for actuating the plunger remains recessed in the body of the plug so that prior art plug insertion tools can be used for plug installation. In some embodiments, the plug insertion tool may be a hot tapping machine. Once the plug has been set into the pressurized pipeline fitting, no metal-to-metal seal is used exclusively for maintaining a seal, but every leak path is sealed using elastomeric or polymer sealing technology.

The plunger does not rotate along a threaded surface during actuation, but translates linearly, allowing elastomers to be used for sealing between the plunger and the fitting wall without depending exclusively on a reduction in fitting bore for sealing. If an internal ledge is added to the fitting for a sealing seat, the translating plunger engages linearly into the seat rather than rotating into place. Linear translation helps mitigate seal wear and produces less seal wear than would rotational translation and, therefore, reduces the potential for leak paths to develop.

The valve plug may be adapted for use in pipelines operating in class locations 1 to *4, see* 49 C.F.R.§ 192.5, and operating in a range of 0 psig to at least 2220 psig (~ 15,306 kpa), for example, 200 psig to 1500 psig (~ 1378 kpa to ~10,342 kpa), there being sub-ranges within these broader ranges as well as discrete values. In some embodiments, the valve plug may be rated for 1440 psig maximum pressure, the rated pressure being below a maximum pressure that the plug can seal against . The valve plug may also be used in pipelines operating below 200 psig, for example, where operating pressure has been dropped (at least temporarily).

In some embodiments, the plug is a two-inch (50 mm) plug. In other embodiments, it is a one-inch (25 mm) plug. Embodiments may be created within this size range *(e.g.,* 1.25 in, 1.5 in, etc.; 33 mm, 40 mm, etc.) as well as outside of this size range (*e.g.,* 3 in, etc.; 80 mm etc.). The tee and plug may be provided as a single unit to the end user. The tee may include a seat or ledge for the bottom seal. A completion cap, such as but not limited to a T.D. Williamson, Inc. THREAD-O-RING^{™} cap, may then be connected to upper end of the tee. Standard commercial caps or customized caps may also be used, including caps that provide a drive such as a stem for receiving a plug insertion tool, the drive being connected to the threaded stem.

The structure of the plug allows for maintenance under pressure and dual dynamic sealing. An anti-rotation stop prevents the sealing plunger from rotating as it is extended and retracted by the threaded stem as well as when in use. The anti-rotation also prevents the plug from needing to retract upwards and therefore provides for a lower recessed profile. The recessed profile allows full access to the driving mechanism (such as but not limited to the square drive provided in this example). The unobstructed driving mechanism allows the plug to be set with existing tapping or pipe servicing machines, such as but not limited to T.D. Williamson tapping machines.

The dual dynamic sealing may be provided by any combination of elastomeric or polymer sealing technology such as, but not limited to O-rings, POLYPAK^{®}s, backing rings, The seal or seals at the lower end of the plug may also be any combination of elastomeric or polymer sealing technology such as O-rings, POLYPAK^{®} rings, backing rings, or equivalents thereof, that provide bi-directional sealing (flow through side outlet or up). A machined disc with grooves may be used to accommodate the seals at the lower end.

### BRIEF DESCRIPTION OF THE DRAWINGS

FIG. 1 is an isometric cross-section view of an embodiment of valve plug of this disclosure. The plug is shown with its plunger in an extended or advanced (sealing) position.
FIG. 2 is another isometric cross-section view showing a plunger of the valve plug in a partially retracted or partially advanced position.

### Elements used in the Drawings and Description

- V: Valve plug
- Vu: Uppermost end of tee
- T: Tee or fitting
- S: Seat (optional)
- O: Side outlet
- P: Plug
- 10: Plug body
- 10a: Top end
- 10b: Bottom end
- 10c: Counter-bored hole or central opening
- 10d: Drive or keyway
- 15: Elastomeric or polymer seal
- 17: Pipe or tube or guide
- 17a: Upper end
- 17b: Lower end
- 17c: Sidewall
- 17d: Hole
- 23: Anti-rotation stop or pin
- 27: Screw or threaded stem
- 27a: Upper end screw body
- 27b: Lower end
- 27c: Lock washer
- 31: Plunger
- 31a: Top end
- 31b: Bottom end
- 31c: Sidewall
- 31d: Slot
- 35: Seal assembly
- 35a: Elastomeric or polymer seal
- 37: Threads to receive completion cap
- 39: Longitudinal centerline or axis

### DESCRIPTION

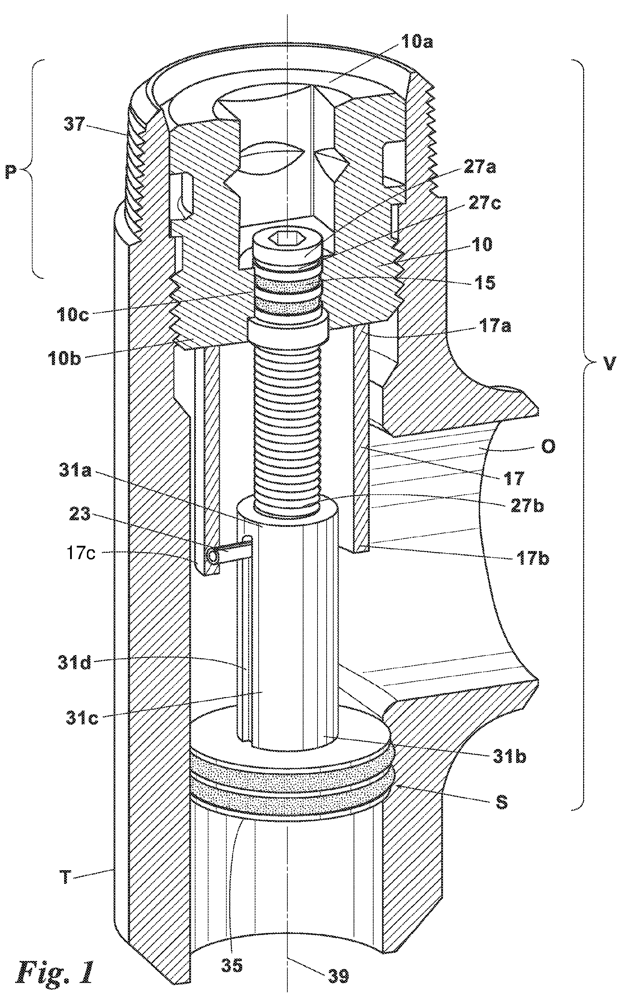

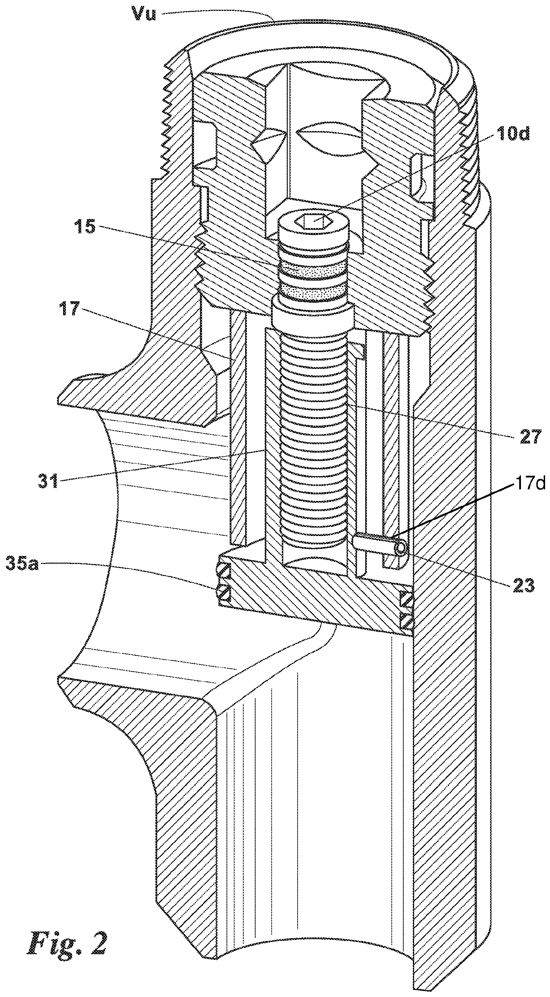

Referring to FIGS. 1 and 2, in embodiments of this disclosure, the valve plug V includes a plug body 10 arranged coaxial a central longitudinal axis 39 of the valve plug V and having a bottom end 10b with a central opening 10c. A tube 17 is arranged coaxial to the central opening 10c and connected to the bottom end 10b of the plug body 10. The tube 17 has a larger diameter than the central opening 10c and includes a sidewall 17c with a through hole 17d.

The valve plug V further includes a threaded stem or screw 27 having an upper end 27a partially contained by, extending from, the central opening10c and a lower end 27b surrounded by the tube 17. According to the claimed invention, the upper end 27a of the screw 27 includes a pair of elastomeric or polymer seals 15 spaced from one another and arranged about the upper end. The upper end 27a may include a non-threaded portion where the seals 15 are located. To rotate the screw 27 in a first and second direction opposite that of the first, a drive 10d is provided at a top end 10a of the plug body 10, the top end 10a being recessed relative to the uppermost end Vu of the tee (T). The drive 10d may adapted to receive a predetermined insertional tool for plug installation.

The plunger 31 is connected to the lower end 27b of the screw 27. A top end 31a of the plunger 31 is surrounded by the tube 17. A bottom end 31b of the plunger 31 includes a seal assembly 35 that extends past a lower end 17b of the tube 17. The seal assembly 35 includes pair of elastomeric or polymer seals 35a spaced from one another and arranged about the bottom end 31b. The seals 35a may be a same or different elastomer or polymer than seals 15 of the screw 27. The plunger 31 also includes a sidewall 31c having a slot 31d that extends between the seal assembly 35 and a top end 31a of the plunger 31.

According to the claimed invention, the valve plug V includes a plug body 10 having a top end 10a and a bottom end 10b; a tube 17 connected to the bottom end 10b of the plug body 10, the tube 17 including a sidewall wall 17c with a through hole 17d; a screw 27 at least partially contained by the tube17 and having at least one seal 15 located toward an upper end 27a of the screw 27 and a drive 10d located at the upper end 27a of the screw 27; a plunger 31 connected to the screw27 and having a seal assembly 35 extending past a bottom end 17b of the tube 17; the plunger 31 further including a sidewall 31c having a slot 31d extending between the seal assembly35 and a top end 31a of the plunger 31; and an anti-rotation stop 23 received by the through hole 17d of the tube 17 and the slot 31d of the plunger 31. When the screw 27 is rotated in a first direction and in a second direction opposite the first direction, the plunger 31 does not rotate. When the screw 17 is rotated in the first direction and in the second direction, a linear distance between the seal assembly 35 and the lower end 17b of the tube 17 increases and decreases, respectively. The first direction may advance the screw 27 and therefore the plunger 31. The second direction may retract the screw 27 and therefore the plunger 31.

According to the claimed invention, , the valve plug V comprises a plug body 10 having a top end 10a, the top end 10a recessed relative to an uppermost end Vu of the tee (T), and a bottom end 10b, the bottom end 10b having a central opening 10c. A tube 17 is connected to the bottom end 10b of the plug body 10 and includes a sidewall 17c with a through hole 17d. A screw 27, having an upper end 27a that is partially contained by the central opening 10c, extends from the central opening 10c and has a lower end 27b surrounded by the tube 17. The upper end 27a of the screw 27 includes at least one seal 15. In embodiments, the seal 15 is non-metallic seal and may be a pair of seals 15 spaced apart from one another. A plunger 31 is connected to the lower end 27b of the screw 27. A top end 31a of the plunger is surrounded by the tube 17 and its bottom end 31b, which includes a seal assembly 35, extends past a lower end 17b of the tube 17. The seal assembly 35 includes at least one seal 35a. In embodiments, the seal 35a is a non-metallic seal. According to the claimed invention, the seal assembly 35 includes a pair of seals 35a spaced from one another. The plunger 31 further includes a sidewall 31c having a slot 31d extending between the seal assembly 35 and the top end 31a of the plunger 3. An anti-rotation stop 23 is received by the through hole 17d of the tube 17 and the slot 31d of the plunger 31. In embodiments, the screw 27 includes a drive 10d located at an upper end 27a of the screw 27, the drive 10d being recessed relative to a top end Vu of the plug body (10).

**In** embodiments of a method of this disclosure for preventing fluid flow through a side outlet of a tee connected to a pipeline, the method includes inserting the valve plug (V) into the tee, the valve plug V including a screw 27 and a plunger 31 connected to a lower end 27b of the screw 27; inserting a plug setting tool into a drive 10d connected to the screw 27; using the plug setting tool to rotate the screw 27 in a first direction; during the rotating in the first direction, maintaining sealing engagement by way of a pair of seals 15 spaced apart from one another at an upper end 27a of the screw 27; advancing the plunger 31 into a sealing position, the plunger 31 including a seal assembly 35; and during the advancing, preventing the plunger 31 from rotating.

**In** embodiments of the method, the method may further include, after the sealing position, removing the plug setting tool and capping an uppermost end Vu of the valve plug V. The method may further comprise removing the capping; re-inserting the plug setting tool into the drive 10d located at the upper end 27a of the screw 27; using the plug setting tool to rotate the screw 27 in a second direction opposite that of the first direction; during the rotating in the second direction, maintaining the sealing engagement by way of the pair of seals 15; and retracting the plunger 37 into a non-sealing position; and during the retracting, preventing the plunger 31 from rotating.

## Claims

1. A tee (T) adapted for use with a pipe, the tee including a valve plug (V) comprising:
a plug body (10) arranged coaxial a central longitudinal axis (39) of the valve plug, the plug body having a top end (10a) and a bottom end (10b), the bottom end having a central opening (10c);
a tube (17) arranged coaxial to the central opening and connected to the bottom end of the plug body, the tube having a larger diameter than the central opening
a threaded stem (27) having an upper end (27a) partially contained by, extending from, the central opening and a lower end (27b) surrounded by the tube;
a plunger (31) connected to the lower end of the threaded stem and having a top end (31a) surrounded by the tube, the plunger including a bottom end (31b) with a seal assembly (35) extending past a lower end (17b) of the tube, the seal assembly including a pair of seals (35a) spaced from one another;
the tee **characterized by**:
the top end of the plug body being recessed relative to an uppermost end (Vu) of the tee (T);
the tube including a sidewall (17c) with a through hole (17d);
the upper end of the threaded stem further including a pair of seals (15) spaced from one another;
the plunger including a sidewall (31c) having a slot (31d) extending between the seal assembly and the top end of the plunger; and
an anti-rotation stop (23) received by the through hole of the tube and the slot of the plunger;
wherein, when the threaded stem is rotated in a first direction and in a second direction opposite the first direction, the plunger does not rotate; and
wherein, when the threaded stem is rotated in the first direction and in the second direction, a linear distance between the seal assembly and the lower end of the tube increases and decreases, respectively.

2. The tee of claim 1, further comprising the threaded stem including a drive (10d) located at the upper end (27a) of the threaded stem.

3. A method for preventing fluid flow through a side outlet of a tee connected to a pipeline, the method comprising:
inserting the valve plug into the tee of claim 2, the tee being connected to a pipeline;
inserting a plug setting tool into the drive;
using the plug setting tool to rotate the threaded stem of the valve plug in a first direction;
during the rotating in the first direction,
maintaining sealing engagement by way of the pair of seals of the threaded stem;
advancing the plunger into a sealing position; and
during the advancing, preventing the plunger from rotating.

4. The method of claim 3, further comprising, after the sealing position:
removing the plug setting tool.

5. The method of claim 4, further comprising, after the sealing position:
capping an uppermost end (Vu) of the valve plug.

6. The method of claim 5, further comprising:
removing the capping;
re-inserting the plug setting tool into the drive located at the upper end of the threaded stem;
using the plug setting tool to rotate the threaded stem in a second direction opposite that of the first direction;
during the rotating in the second direction, maintaining the sealing engagement by way of the pair of seals; and retracting the plunger into a non-sealing position; and
during the retracting, preventing the plunger from rotating.

7. The method of claim 4, further comprising:
re-inserting the plug setting tool into the drive;
using the plug setting tool to rotate the threaded stem in a second direction opposite that of the first direction;
during the rotating in the second direction, maintaining the sealing engagement by way of the pair of seals; and retracting the plunger into a non-sealing position; and
during the retracting, preventing the plunger from rotating.

## Patentansprüche

1. T-Stück (T), das zur Verwendung mit einem Rohr ausgelegt ist, wobei das T-Stück einen Ventilstopfen (V) enthält, der Folgendes umfasst:
einen Stopfenkörper (10), der koaxial zu einer zentralen Längsachse (39) des Ventilstopfens angeordnet ist, wobei der Stopfenkörper ein oberes Ende (10a) und ein unteres Ende (10b) aufweist, wobei das untere Ende eine zentrale Öffnung (10c) aufweist;
ein Rohr (17), das koaxial zur zentralen Öffnung angeordnet und mit dem unteren Ende des Stopfenkörpers verbunden ist, wobei das Rohr einen größeren Durchmesser als die zentrale Öffnung aufweist;
einen Gewindeschaft (27), der ein oberes Ende (27a), das teilweise von der zentralen Öffnung umschlossen ist und aus dieser herausragt, sowie ein unteres Ende (27b) aufweist, das vom Rohr umgeben ist;
einen Kolben (31), der mit dem unteren Ende des Gewindeschafts verbunden ist und ein vom Rohr umgebenes oberes Ende (31a) aufweist, wobei der Kolben ein unteres Ende (31b) mit einer Dichtungsanordnung (35) enthält, die sich über ein unteres Ende (17b) des Rohrs hinaus erstreckt, wobei die Dichtungsanordnung ein Paar voneinander beabstandeter Dichtungen (35a) enthält;
wobei das T-Stück durch Folgendes gekennzeichnet ist:
das obere Ende des Stopfenkörpers ist gegenüber dem obersten Ende (Vu) des T-Stücks (T) zurückgesetzt;
das Rohr enthält eine Seitenwand (17c) mit einer Durchgangsbohrung (17d);
das obere Ende des Gewindeschafts ferner ein Paar voneinander beabstandeter Dichtungen (15) enthält;
der Kolben enthält eine Seitenwand (31c), die einen Schlitz (31d) aufweist, der sich zwischen der Dichtungsanordnung und dem oberen Ende des Kolbens erstreckt; und
ein Verdrehschutzanschlag (23) ist in der Durchgangsbohrung des Rohrs und im Schlitz des Kolbens aufgenommen;
wobei sich der Kolben nicht dreht, wenn der Gewindeschaft in eine erste Richtung und in eine der ersten Richtung entgegengesetzte zweite Richtung gedreht wird; und
wobei sich der lineare Abstand zwischen der Dichtungsanordnung und dem unteren Ende des Rohrs vergrößert bzw. verkleinert, wenn der Gewindeschaft in die erste Richtung und in die zweite Richtung gedreht wird.

2. T-Stück nach Anspruch 1, ferner umfassend den Gewindeschaft, der einen Antrieb (10d) enthält, der sich am oberen Ende (27a) des Gewindeschafts befindet.

3. Verfahren zum Verhindern eines Fluidflusses durch einen Seitenauslass eines T-Stücks, das an eine Rohrleitung angeschlossen ist, wobei das Verfahren Folgendes umfasst:
Einführen des Ventilstopfens in das T-Stück nach Anspruch 2, wobei das T-Stück an eine Rohrleitung angeschlossen ist;
Einführen eines Einstellwerkzeugs für den Stopfen in den Antrieb;
Verwenden des Einstellwerkzeugs für den Stopfen, um den Gewindeschaft des Ventilstopfens in eine erste Richtung zu drehen;
während des Drehens in die erste Richtung,
Aufrechterhalten des Dichtungseingriffs mittels des Paares Dichtungen des Gewindeschafts;
Vorschieben des Kolbens in eine abdichtende Position; und
während des Vorschiebens, Verhindern, dass sich der Kolben dreht.

4. Verfahren nach Anspruch 3, das nach der abdichtenden Position ferner Folgendes umfasst:
Entfernen des Einstellwerkzeugs für den Stopfen.

5. Verfahren nach Anspruch 4, das nach der abdichtenden Position ferner Folgendes umfasst:
Abdecken des obersten Endes (Vu) des Ventilstopfens.

6. Verfahren nach Anspruch 5, das ferner Folgendes umfasst:
Entfernen der Abdeckung;
erneutes Einführen des Einstellwerkzeugs für den Stopfen in den Antrieb, der sich am oberen Ende des Gewindeschafts befindet;
Verwenden des Einstellwerkzeugs für den Stopfen, um den Gewindeschaft in eine der ersten Richtung entgegengesetzte zweite Richtung zu drehen;
während des Drehens in die zweite Richtung,
Aufrechterhalten des Dichtungseingriffs mittels des Paares Dichtungen; und
Zurückziehen des Kolbens in eine nicht abdichtende Position; und
während des Zurückziehens, Verhindern, dass sich der Kolben dreht.

7. Verfahren nach Anspruch 4, das ferner Folgendes umfasst:
erneutes Einführen des Einstellwerkzeugs für den Stopfen in den Antrieb;
Verwenden des Einstellwerkzeugs für den Stopfen, um den Gewindeschaft in eine der ersten Richtung entgegengesetzte zweite Richtung zu drehen;
während des Drehens in die zweite Richtung,
Aufrechterhalten des Dichtungseingriffs mittels des Paares Dichtungen; und
Zurückziehen des Kolbens in eine nicht abdichtende Position; und
während des Zurückziehens, Verhindern, dass sich der Kolben dreht.

## Revendications

1. Un té (T) adapté à une utilisation avec un tuyau, le té comprenant un bouchon de vanne (V) comprenant :
un corps de bouchon (10) disposé coaxialement à un axe longitudinal central (39) du bouchon de vanne, le corps de bouchon comportant une extrémité supérieure (10a) et une extrémité inférieure (10b), l'extrémité inférieure comportant une ouverture centrale (10c) ;
un tube (17) disposé coaxialement à l'ouverture centrale et relié à l'extrémité inférieure du corps de bouchon, le tube présentant un diamètre supérieur à celui de l'ouverture centrale ;
une tige filetée (27) comportant une extrémité supérieure (27a) partiellement logée dans l'ouverture centrale et faisant saillie à partir de celle-ci, ainsi qu'une extrémité inférieure (27b) entourée par le tube ;
un plongeur (31) relié à l'extrémité inférieure de la tige filetée et comportant une extrémité supérieure (31a) entourée par le tube, le plongeur comprenant une extrémité inférieure (31b) munie d'un ensemble d'étanchéité (35) s'étendant au-delà d'une extrémité inférieure (17b) du tube, l'ensemble d'étanchéité comprenant une paire de joints (35a) espacés l'un de l'autre ;
le té étant **caractérisé par** :
l'extrémité supérieure du corps de bouchon étant en retrait par rapport à une extrémité la plus haute (Vu) du té (T) ;
le tube comprenant une paroi latérale (17c) comportant un trou traversant (17d) ;
l'extrémité supérieure de la tige filetée comprenant en outre une paire de joints (15) espacés l'un de l'autre ;
le plongeur comprenant une paroi latérale (31c) comportant une fente (31d) s'étendant entre l'ensemble d'étanchéité et l'extrémité supérieure du plongeur ; et
une butée anti-rotation (23) reçue dans le trou traversant du tube et dans la fente du plongeur ;
dans lequel, lorsque la tige filetée est tournée dans un premier sens et dans un second sens opposé au premier sens, le plongeur ne tourne pas ; et
dans lequel, lorsque la tige filetée est tournée dans le premier sens et dans le second sens, une distance linéaire entre l'ensemble d'étanchéité et l'extrémité inférieure du tube augmente et diminue, respectivement.

2. Le té selon la revendication 1, comprenant en outre la tige filetée comportant un entraînement (10d) situé au niveau de l'extrémité supérieure (27a) de la tige filetée.

3. Un procédé permettant d'empêcher l'écoulement de fluide à travers une sortie latérale d'un té relié à une canalisation, le procédé comprenant :
l'insertion du bouchon de vanne dans le té selon la revendication 2, le té étant relié à une canalisation ;
l'insertion d'un outil de mise en place du bouchon dans l'entraînement ;
l'utilisation de l'outil de mise en place du bouchon pour faire tourner la tige filetée du bouchon de vanne dans un premier sens ;
pendant la rotation dans le premier sens,
le maintien de l'engagement étanche au moyen de la paire de joints de la tige filetée ;
l'avancement du plongeur jusqu'à une position d'étanchéité ; et
pendant l'avancement, l'empêchement de la rotation du plongeur.

4. Le procédé selon la revendication 3, comprenant en outre, après l'obtention de la position d'étanchéité :
le retrait de l'outil de mise en place du bouchon.

5. Le procédé selon la revendication 4, comprenant en outre, après l'obtention de la position d'étanchéité :
la pose d'un capuchon sur une extrémité la plus haute (Vu) du bouchon de vanne.

6. Le procédé selon la revendication 5, comprenant en outre :
le retrait du capuchon ;
la réinsertion de l'outil de mise en place du bouchon dans l'entraînement situé au niveau de l'extrémité supérieure de la tige filetée ;
l'utilisation de l'outil de mise en place du bouchon pour faire tourner la tige filetée dans un second sens opposé au premier sens ;
pendant la rotation dans le second sens,
le maintien de l'engagement étanche au moyen de la paire de joints ; et
la rétraction du plongeur jusqu'à une position non étanche ; et
pendant la rétraction, l'empêchement de la rotation du plongeur.

7. Le procédé selon la revendication 4, comprenant en outre :
la réinsertion d'un outil de mise en place du bouchon dans l'entraînement ;
l'utilisation de l'outil de mise en place du bouchon pour faire tourner la tige filetée dans un second sens opposé au premier sens ;
pendant la rotation dans le second sens,
le maintien de l'engagement étanche au moyen de la paire de joints ; et
la rétraction du plongeur jusqu'à une position non étanche ; et
pendant la rétraction, l'empêchement de la rotation du plongeur.
